# EUROPÄISCHE PATENTANMELDUNG

(11) **EP 1 235 079 A2**
(43) Veröffentlichungstag der Anmeldung: **28.08.2002**
(21) Anmeldenummer: 01129602.7
(22) Anmeldetag: 12.12.2001
(51) Int. Cl.: G01S 13/22, G01S 13/93, G01S 13/87

(54) **Verfahren zum Entstören einer Radareinrichtung und Radareinrichtung**

(30) Priorität: 22.02.2001 DE 10108584
(71) Anmelder: ROBERT BOSCH GMBH, 70442 Stuttgart (DE)
(72) Erfinder: Gottwald, Frank, 71277 Rutesheim (DE); Voigtlaender, Klaus, 73117 Wangen (DE); Toennesen, Tore, 72760 Reutlingen (DE)

(57) **Zusammenfassung**

Die Erfindung betrifft ein Verfahren zum Entstören einer Radareinrichtung, bei dem Signale mit einer Trägerfrequenz ausgesendet werden und die Signale gepulst mit einer Pulswiederholfrequenz ausgesendet werden, wobei die Pulswiederholfrequenz beziehungsweise die Trägerfrequenz während des Betriebs der Radareinrichtung variiert werden. Die Erfindung betrifft ferner eine Radareinrichtung.

## Beschreibung

Die Erfindung betrifft ein Verfahren zum Entstören einer Radareinrichtung, bei dem Signale mit einer Trägerfrequenz ausgesendet werden und die Signale gepulst mit einer Pulswiederholfrequenz ausgesendet werden. Die Erfindung betrifft ferner eine Radareinrichtung mit Mitteln zum Aussenden von Signalen mit einer Trägerfrequenz und Mitteln zum Pulsen der Signale mit einer Pulswiederholfrequenz.

### Stand der Technik

Für Radareinrichtungen gibt es zahlreiche Anwendungen auf den verschiedensten Gebieten der Technik. Beispielsweise ist für die Nahbereichssensorik in Kraftfahrzeugen der Einsatz von Radar-Sensoren möglich.

Grundsätzlich werden bei Radareinrichtungen elektromagnetische Wellen von einer Sendeantenne abgestrahlt. Treffen diese elektromagnetischen Wellen auf ein Hindernis, so werden sie reflektiert und nach der Reflektion von einer anderen oder derselben Antenne wieder empfangen. Nachfolgend werden die empfangenen Signale einer Signalverarbeitung und Signalauswertung zugeführt.

Beispielsweise werden in Kraftfahrzeugen Radarsensoren für die Messung des Abstands zu Zielen und/oder der Relativgeschwindigkeit bezüglich solcher Ziele außerhalb des Kraftfahrzeuges eingesetzt. Als Ziele kommen zum Beispiel vorausfahrende oder parkende Kraftfahrzeuge oder Einrichtungen an der Strasse, Fußgänger oder Radfahrer im Umfeld des Kraftfahrzeuges in Frage.

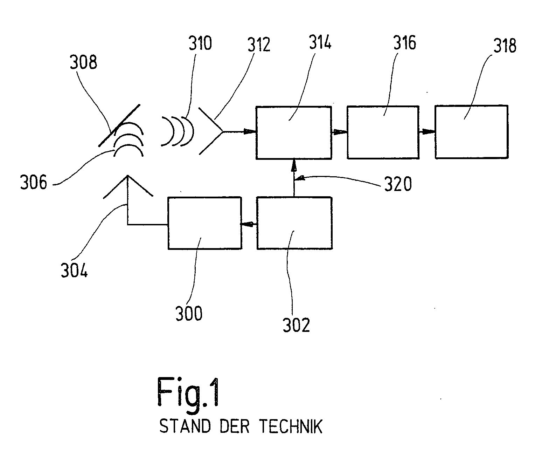

Figur 1 zeigt eine schematische Darstellung einer Radareinrichtung mit einem Korrelationsempfänger des Standes der Technik. Ein Sender 300 wird durch eine Pulserzeugung 302 veranlasst, über eine Antenne 304 ein Sendesignal 306 abzustrahlen. Das Sendesignal 306 trifft auf ein Zielobjekt 308, wo es reflektiert wird. Das Empfangssignal 310 wird von der Antenne 312 empfangen. Diese Antenne 312 kann mit der Antenne 304 identisch sein. Nach dem Empfang des Empfangssignals 310 durch die Antenne 312 wird dieses dem Empfänger 314 übermittelt und nachfolgend über eine Einheit 316 mit Tiefpass und Analog/Digital-Wandlung einer Signalauswertung 318 zugeführt. Die Besonderheit bei dem Korrelationsempfänger besteht darin, dass der Empfänger 314 von der Pulserzeugung 302 ein Referenzsignal 320 erhält. Die von dem Empfänger 314 empfangenen Empfangssignale 310 werden in dem Empfänger 314 mit dem Referenzsignal 320 gemischt. Durch die Korrelation kann auf der Grundlage der zeitlichen Verzögerung vom Aussenden bis zum Empfangen der Radarimpulse beispielsweise auf die Entfernung eines Zielobjektes geschlossen werden.

Bei gewöhnlichen Pulsradareinrichtungen sind sowohl die Mittenfrequenz als auch die Pulswiederholfrequenz fest eingestellt. Insbesondere im Zusammenhang mit speziellen Zulassungsvorschriften können diese fest eingestellten Größen zu unerlaubt hohen Pegeln führen. Ebenso sind derartige Einrichtungen sehr störempfindlich.

### Vorteile der Erfindung

Die Erfindung baut gemäß einer ersten Ausführungsform auf dem gattungsgemäßen Verfahren dadurch auf, dass die Pulswiederholfrequenz während des Betriebs der Radareinrichtung variiert wird. Auf diese Weise ist es möglich, die genannten Nachteile zu beseitigen. Insbesondere können durch ein Variieren der Pulswiederholfrequenz Störungen eliminiert werden.

Ebenfalls ist es möglich, dass die Trägerfrequenz während des Betriebs der Radareinrichtung variiert wird. Dies ist eine weitere Möglichkeit, verschiedenartige Störungen zu beseitigen.

In einer bevorzugten Ausführungsform wird die Pulswiederholfrequenz deterministisch variiert. Das variieren kann zum Beispiel so erfolgen, dass vier verschiedene Pulswiederholfrequenzen in festgelegter Reihenfolge über ebenfalls festgelegte Zeiträume verwendet werden.

Es ist aber auch denkbar, dass die Pulswiederholfrequenz chaotisch variiert wird. Dies ist eine besonders sichere Möglichkeit der Variation, welche insbesondere im Hinblick auf eine potentielle absichtliche Störung des Radars ihre besonderen Vorteile entfaltet.

Es kann vorteilhaft sein, dass die Trägerfrequenz durch Phasenmodulation variiert wird. Dabei handelt es sich um ein geeignetes Verfahren zum Verändern der ausgesendeten Signale, so dass letztlich eine Entstörung erfolgen kann.

Vergleichbare Vorteile kann eine Variation der Trägerfrequenz durch Frequenzmodulation mit sich bringen.

Durch einen geeigneten Modulationsindex kann sogar der Träger unterdrückt werden.

In dem Fall, dass die Trägerfrequenz durch Frequenzmodulation variiert wird, ist es besonders vorteilhaft, dass durch Mischen des empfangenen Signals mit der modulierten Trägerfrequenz eine virtuelle Zwischenfrequenz erzeugt wird und dass eine Auswertung des empfangenen Signals bei der virtuellen Zwischenfrequenz erfolgt. Durch das Modulieren der Trägerfrequenz mit einer Modulationsfrequenz werden im Frequenzspektrum Seitenlinien erzeugt. Der Abstand zwischen diesen Seitenlinien entspricht der Modulationsfrequenz. Wird das empfangene Signal nun mit der modulierten Trägerfrequenz gemischt, so kann auch auf diesen Seitenlinien eine Mischung erfolgen. Das Nutzsignal, welches im vorliegenden Fall beispielsweise ein Pulsspektrum ist, erscheint somit auch auf den Seitenlinien. Betrachtet man nun eine solche Seitenlinie mit Hilfe eines Bandpass-Filters, so lässt sich dieses Signal anstelle des Signals bei einer Frequenz von 0 auswerten, Das bei der Modulationsfrequenz liegende Signal hat zwar eine geringere Amplitude, allerdings verhält sich das Rauschen in einem Empfänger im Wesentlichen umgekehrt proportional zur Frequenz. Eine Auswertung bei einer Frequenz von 0 erzeugt somit einen hohen Rauschanteil im Empfänger, während eine Auswertung bei der virtuellen Zwischenfrequenz, beispielsweise bei 50 kHz, einen verringerten Rauschanteil mit sich bringt.

Weiterhin ist es denkbar, dass Frequenzsprungverfahren zum Variieren der Trägerfrequenz verwendet werden. Das Frequenzsprungverfahren, die Phasenmodulation und die Frequenzmodulation können auch gemischt zum Einsatz kommen. Bei der Wahl der Modulationsfrequenz und des Hubes beim Frequenzsprungverfahren ist darauf zu achten, dass die Modulationsfrequenz beziehungsweise die Hubfrequenz größer sind als die Pulswiederholfrequenz.

Gemäß einer zweiten Ausführungsform baut die Erfindung auf dem gattungsgemäßen Verfahren dadurch auf, dass die Trägerfrequenz während des Betriebs der Radareinrichtung variiert wird. Die Trägerfrequenz wird also nicht zusätzlich zur Pulswiederholfrequenz variiert. Vielmehr wird das Radar ausreichend durch Variation der Trägerfrequenz entstört.

Die Erfindung baut auf der gattungsgemäßen Radareinrichtung in einer ersten Ausführungsform dadurch auf, dass Mittel zum Variieren der Pulswiederholfrequenz während des Betriebs vorgesehen sind. Durch das Variieren der Pulswiederholfrequenz können Störungen während des Betriebs eliminiert werden.

Ferner kann es von Vorteil sein, dass zusätzlich Mittel zum Variieren der Trägerfrequenz während des Betriebs vorgesehen sind. Dies ist eine weitere Möglichkeit, verschiedene Störungen zu beseitigen.

Die Radareinrichtung ist besonders vorteilhaft dadurch weitergebildet, dass die Pulswiederholfrequenz deterministisch variiert wird. Verschiedene Pulswiederholfrequenzen können beispielsweise in festgelegter Reihenfolge über festgelegte Zeiträume verwendet werden.

In einer anderen Ausführungsform kann es sich jedoch auch als vorteilhaft erweisen, dass die Pulswiederholfrequenz chaotisch variiert wird.

Vorzugsweise ist die Radareinrichtung in der Weise weitergebildet, dass die Trägerfrequenz durch Phasenmodulation variiert wird. Dies ist ein beispielhaftes Modulationsverfahren, mit welchem letztlich eine Entstörung erfolgen kann.

Ebenso kann es von Vorteil sein, dass die Trägerfrequenz durch Frequenzmodulation variiert wird.

Die erfindungsgemäße Radareinrichtung ist in der Weise vorteilhaft weitergebildet, dass die Trägerfrequenz durch Frequenzmodulation variiert wird, dass durch Mischen des empfangenen Signals mit der modulierten Trägerfrequenz eine virtuelle Zwischenfrequenz erzeugt wird und dass eine Auswertung des empfangenen Signals bei der virtuellen Zwischenfrequenz erfolgt. Damit arbeitet man zwar mit einem Signal von geringerer Intensität. Aufgrund der Auswertung bei der Zwischenfrequenz ergeben sich jedoch Vorteile aufgrund eines geringeren Empfängerrauschens.

In einer weiteren Ausführungsform kann vorgesehen sein, dass die Trägerfrequenz durch Frequenzsprungverfahren variiert wird. Die verschiedenen Modulationsverfahren, das heißt die Phasenmodulation und die Frequenzmodulation, können auch gemischt zum Einsatz kommen. Ebenfalls kann eine Mischung mit einem Frequenzsprungverfahren erfolgen. Es ist darauf zu achten, dass die Modulationsfrequenz beziehungsweise die Hubfrequenz größer sind als die Pulswiederholfrequenz, um Lücken zu vermeiden.

Gemäß einer zweiten Ausführungsform baut die Radareinrichtung der vorliegenden Erfindung auf der gattungsgemäßen Radareinrichtung dadurch auf, dass Mittel zum Variieren der Trägerfrequenz während des Betriebs vorgesehen sind. Es ist also nicht unbedingt erforderlich, die Trägerfrequenz zusätzlich zur Pulswiederholfrequenz zu variieren. Vielmehr kann das Radar ausreichend durch eine Variation der Trägerfrequenz entstört werden.

Der Erfindung liegt die Erkenntnis zugrunde, dass durch Variation der Mittenfrequenz beziehungsweise der Pulswiederholrate Sendeeigenschaften erzeugt werden können, die auch strengen Zulassungsvorschriften entsprechen. Ferner kann ein entstörtes Radar zur Verfügung gestellt werden, welches weder absichtlich noch unabsichtlich in seiner Funktion beeinflusst wird.

### Zeichnungen

Die Erfindung wird nun mit Bezug auf die begleitenden Zeichnungen anhand bevorzugter Ausführungsformen beispielhaft erläutert.

Dabei zeigt:
- Figur 1: eine schematische Darstellung eines Korrelationsempfängers des Standes der Technik;
- Figur 2: eine beispielhafte Anordnung von Radarsensoren an einem Kraftfahrzeug;
- Figur 3: eine schematische Darstellung einer Radareinrichtung;
- Figur 4: eine schematische Darstellung einer Radareinrichtung mit variabler Pulswiederholfrequenz; und
- Figur 5: eine schematische Darstellung einer Radareinrichtung mit variabler Trägerfrequenz.

### Beschreibung der Ausführungsbeispiele

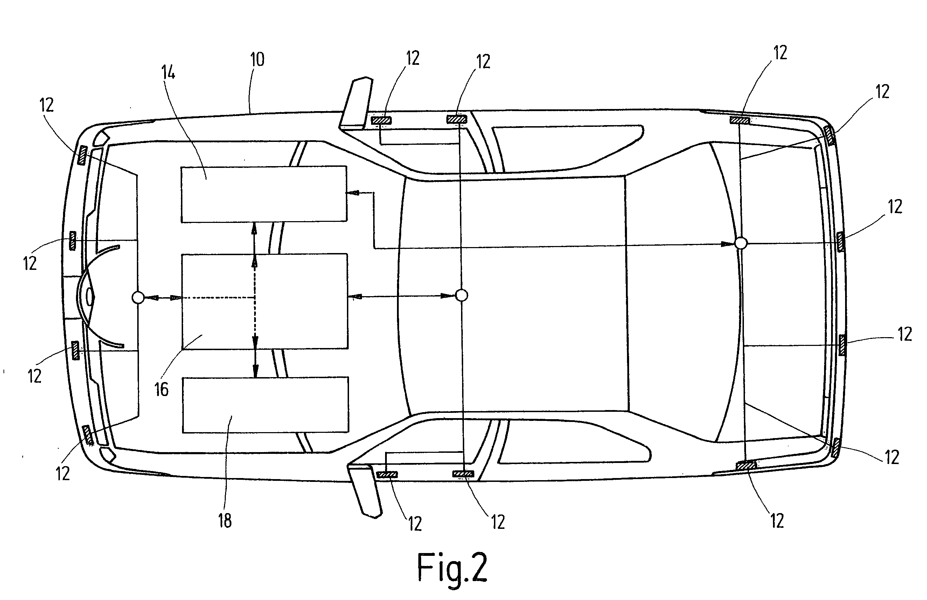

In Figur 2 ist ein Kraftfahrzeug 10 dargestellt, an welchem mehrere Radarsensoren 12 angeordnet sind. Die Radarsensoren sind über ein Buskonzept untereinander und mit Steuerungs- und Kontrolleinheiten verbunden, wobei insbesondere eine Einheit 14 zur Bereitstellung einer Einparkhilfe und zur Detektion eines toten Winkels, eine Einheit 16 für die Precrash Funktion und cine Einheit 18 für Stop & Go vorgesehen sind.

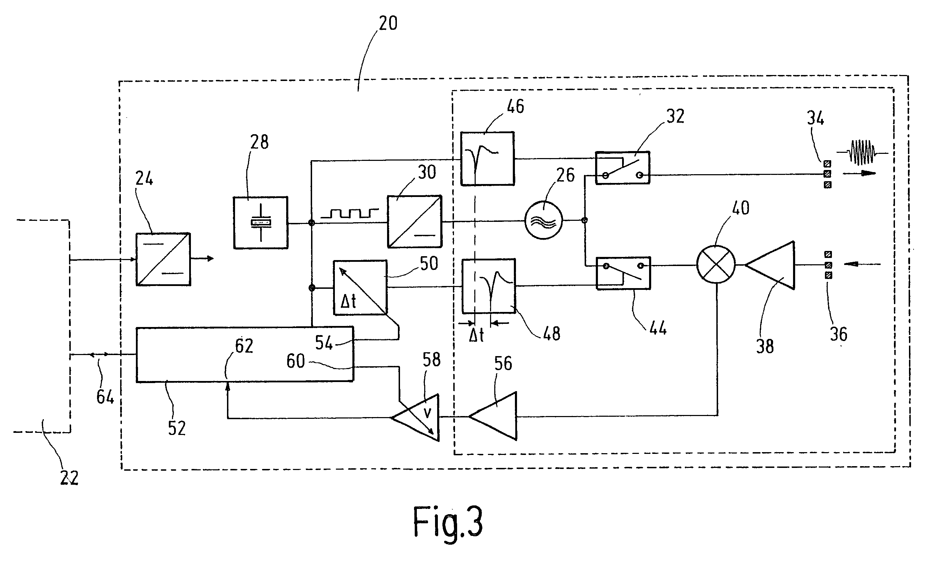

Figur 3 zeigt schematisch den Aufbau eines Sensors 20, welcher im Radarnahbereich eingesetzt wird. Dem Sensor 20 wird von einer elektronischen Steuerungseinheit 22 eine Spannung zur Verfügung gestellt, beispielsweise eine Spannung von 8 V. Diese Spannung wird in einem DC-DC-Wandler 24 transformiert, so dass letztlich die Versorgungsspannung für die Sensorkomponenten zur Verfügung gestellt wird, beispielsweise 5 V. Eine Trägerfrequenz von beispielsweise 24 GHz wird von einem Lokaloszillator 26 geliefert. Dieser Lokaloszillator 26 wird mit einer Vorspannung versorgt, welche letztlich aus den von einem Taktgenerator 28 zur Verfügung gestellten Pulsen mittels eines Wandlers 30 erzeugt wird. Die von dem Taktgenerator 28 erzeugten Pulse, die beispielsweise eine Frequenz von 5 MHz aufweisen können, werden zur Modulation der von dem Lokaloszillator 26 zur Verfügung gestellten Trägersignale verwendet. Diese Modulation erfolgt in dem Sendezweig durch den Schalter 32, welcher von einem Impulsformer 46 geschaltet wird. Der Impulsformer 46 wird wiederum von der Taktfrequenz des Taktgenerators 28 angesteuert. Die so erzeugten gepulsten Signale werden von der Antenne 34 ausgesendet. Im Falle einer Reflektion der Signale, welche von der Antenne 34 ausgesendet werden, werden diese von der Empfangsantenne 36 empfangen. Nach Verstärkung der empfangenen Signale in einem Verstärker 38 werden die Signale einem Mischer 40 zugeführt. In dem Mischer 40 werden die empfangenen Signale mit den gepulsten Signalen des Lokaloszillators 26 gemischt, wobei dieses Pulsen über einen Schalter 44 erfolgt. Der Schalter wird von einem Impulsgeber 48 angesteuert, welcher bezüglich der von dem Impulsgeber 46 ausgegebenen Impulse um eine Verzögerung Δt verzögerte Impulse ausgibt. Diese Verzögerung wird durch eine Verzögerungsschaltung 50 zur Verfügung gestellt. Über einen Microcontroller 52, welcher einen digitalen Signalprozessor aufweist wird die Verzögerung der Verzögerungsschaltung 50 beeinflusst. Dies erfolgt über einen ersten analogen Ausgang 54 des Microcontrollers 52. Über einen zweiten analogen Ausgang 60 werden die von einem Verstärker 56 verarbeiteten Ausgangssignale des Mischers 40 durch weitere variable Verstärkung in dem Verstärker 58 beeinflusst. Die Beeinflussung dieses variablen Verstärkers 58 erfolgt mittels eines zweiten analogen Ausgangs 60 des Microcontrollers 52. Das Ausgangssignal des variablen Verstärkers 58 wird einem analogen Eingang 62 des Microcontrollers 52 zugeführt. Der Microcontroller 52 kommuniziert über einen Eingabe-Ausgabe-Bus 64 (I/O-Bus) mit der elektronischen Steuerungseinheit 22.

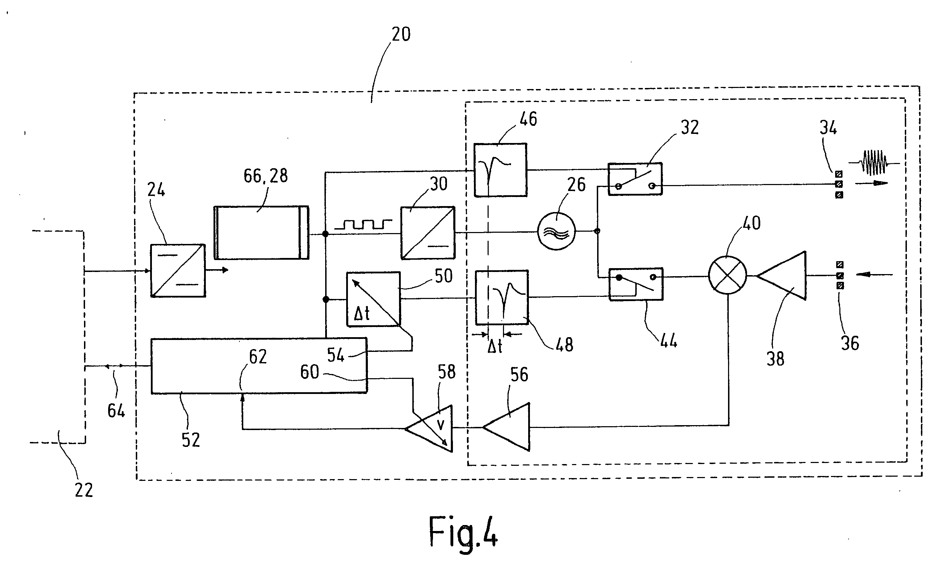

Figur 4 zeigt ein Blockschaltbild einer Radareinrichtung, welches weitgehend dem Blockschaltbild gemäß Figur 3 entspricht. Zusätzlich sind Mittel 66 zum Variieren der Pulswiederholfrequenz vorgesehen. Somit kann aufgrund der Variation der Pulswiederholfrequenz die Radareinrichtung entstört werden.

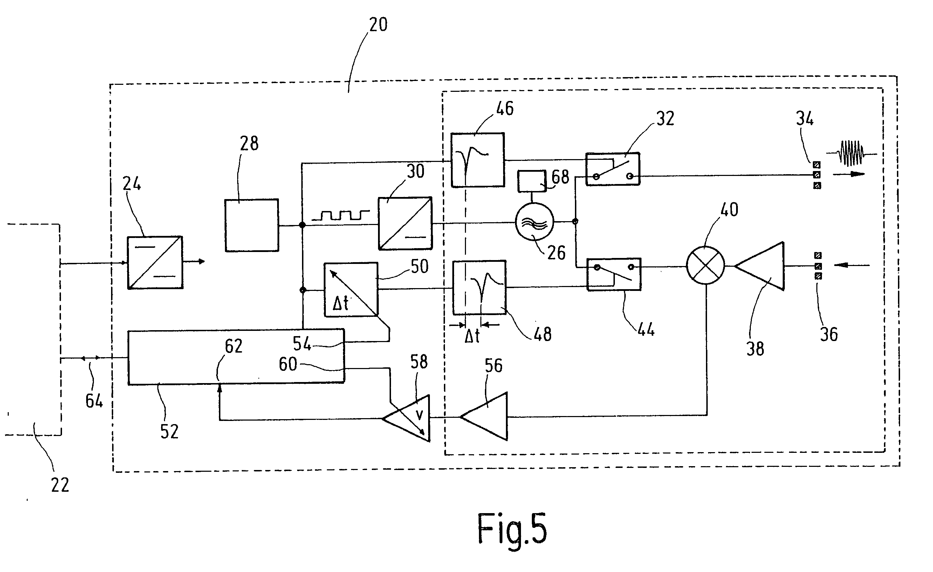

Auch Figur 5 entspricht weitgehend der Darstellung gemäß Figur 3. Hier sind zusätzlich Mittel 68 zum Modulieren der Trägerfrequenz vorgesehen. Auch auf diese Weise ist es möglich, die Radareinrichtung zu entstören.

In einer weiteren Ausführungsform können die Ausführungsformen gemäß Figur 4 und Figur 5 kombiniert werden, das heißt sowohl die Pulswiederholfrequenz als auch die Trägerfrequenz werden moduliert.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

## Patentansprüche

1. Verfahren zum Entstören einer Radareinrichtung, bei dem
- Signale mit einer Trägerfrequenz ausgesendet werden und
- die Signale gepulst mit einer Pulswiederholfrequenz ausgesendet werden,
**dadurch gekennzeichnet, dass** die Pulswiederholfrequenz während des Betriebs der Radareinrichtung variiert wird.

2. Verfahren nach Anspruch 1, **dadurch gekennzeichnet, dass** die Trägerfrequenz während des Betriebs der Radareinrichtung variiert wird.

3. Verfahren nach Anspruch 1 oder 2, **dadurch gekennzeichnet, dass** die Pulswiederholfrequenz deterministisch variiert wird.

4. Verfahren nach einem der vorangehenden Ansprüche, **dadurch gekennzeichnet, dass** die Pulswiederholfrequenz chaotisch variiert wird.

5. Verfahren nach einem der vorangehenden Ansprüche, **dadurch gekennzeichnet, dass** die Trägerfrequenz durch Phasenmodulation variiert wird.

6. Verfahren nach einem der vorangehenden Ansprüche, **dadurch gekennzeichnet, dass** die Trägerfrequenz durch Frequenzmodulation variiert wird.

7. Verfahren nach einem der vorangehenden Ansprüche, **dadurch gekennzeichnet,**
- **dass** die Trägerfrequenz durch Frequenzmodulation variiert wird,
- **dass** durch Mischen des empfangenen Signals mit der modulierten Trägerfrequenz eine virtuelle Zwischenfrequenz erzeugt wird und
- **dass** eine Auswertung des empfangenen Signals bei der virtuellen Zwischenfrequenz erfolgt.

8. Verfahren nach einem der vorangehenden Ansprüche, **dadurch gekennzeichnet, dass** die Trägerfrequenz durch Frequenzsprungverfahren variiert wird,

9. Verfahren zum Entstören einer Radareinrichtung, bei dem
- Signale mit einer Trägerfrequenz ausgesendet werden und
- die Signale gepulst mit einer Pulswiederholfrequenz ausgesendet werden,
**dadurch gekennzeichnet, dass** die Trägerfrequenz während des Betriebs der Radareinrichtung variiert wird.

10. Verfahren nach Anspruch 9, **dadurch gekennzeichnet, dass** die Pulswiederholfrequenz während des Betriebs der Radareinrichtung variiert wird.

11. Verfahren nach Anspruch 9 oder 10, **dadurch gekennzeichnet, dass** die Pulswiederholfrequenz deterministisch variiert wird.

12. Verfahren nach einem der Ansprüche 9 bis 11, **dadurch gekennzeichnet, dass** die Pulswiederholfrequenz chaotisch variiert wird.

13. Verfahren nach einem der Ansprüche 9 bis 12, **dadurch gekennzeichnet, dass** die Trägerfrequenz durch Phasenmodulation variiert wird.

14. Verfahren nach einem der Ansprüche 9 bis 13, **dadurch gekennzeichnet, dass** die Trägerfrequenz durch Frequenzmodulation variiert wird.

15. Verfahren nach einem der Ansprüche 9 bis 14, **dadurch gekennzeichnet,**
- **dass** die Trägerfrequenz durch Frequenzmodulation variiert wird,
- **dass** durch Mischen des empfangenen Signals mit der modulierten Trägerfrequenz eine virtuelle Zwischenfrequenz erzeugt wird und
- **dass** eine Auswertung des empfangenen Signals bei der virtuellen Zwischenfrequenz erfolgt.

16. Verfahren nach einem der Ansprüche 9 bis 15, **dadurch gekennzeichnet, dass** die Trägerfrequenz durch Frequenzsprungverfahren variiert wird.

17. Radareinrichtung mit
- Mitteln (34) zum Aussenden von Signalen mit einer Trägerfrequenz und
- Mitteln (28, 46, 32) zum Pulsen der Signale mit einer Pulswiederholfrequenz,
**dadurch gekennzeichnet, dass** Mittel (66) zum Variieren der Pulswiederholfrequenz während des Betriebs vorgesehen sind.

18. Radareinrichtung nach Anspruch 17, **dadurch gekennzeichnet, dass** Mittel (68) zum Variieren der Trägerfrequenz während des Betriebs vorgesehen sind.

19. Radareinrichtung nach Anspruch 17 oder 18, **dadurch gekennzeichnet, dass** die Pulswiederholfrequenz deterministisch variiert wird,

20. Radareinrichtung nach einem der Ansprüche 17 bis 19, **dadurch gekennzeichnet, dass** die Pulswiederholfrequenz chaotisch variiert wird.

21. Radareinrichtung nach einem der Ansprüche 17 bis 20, **dadurch gekennzeichnet, dass** die Trägerfrequenz durch Phasenmodulation variiert wird.

22. Radareinrichtung nach einem der Ansprüche 17 bis 21, **dadurch gekennzeichnet,**
- **dass** die Trägerfrequenz durch Frequenzmodulation variiert wird,
- **dass** durch Mischen des empfangenen Signals mit der modulierten Trägerfrequenz eine virtuelle Zwischenfrequenz erzeugt wird und
- **dass** eine Auswertung des empfangenen Signals bei der virtuellen Zwischenfrequenz erfolgt.

23. Radareinrichtung nach einem der Ansprüche 17 bis 22, **dadurch gekennzeichnet, dass** die Trägerfrequenz durch Frequenzsprungverfahren variiert wird.

24. Radareinrichtung mit
- Mitteln (34) zum Aussenden von Signalen mit einer Trägerfrequenz und
- Mittein (28, 46, 32) zum Pulsen der Signale mit einer Pulswiederholfrequenz,
**dadurch gekennzeichnet, dass** Mittel (68) zum Variieren der Trägerfrequenz während des Betriebs vorgesehen sind.

25. Radareinrichtung nach Anspruch 24, **dadurch gekennzeichnet, dass** Mittel (66) zum Variieren der Pulswiederholfrequenz während des Betriebs vorgesehen sind.

26. Radareinrichtung nach Anspruch 24 oder 25, **dadurch gekennzeichnet, dass** die Pulswiederholfrequenz deterministisch variiert wird.

27. Radareinrichtung nach einem der Ansprüche 24 bis 26, **dadurch gekennzeichnet, dass** die Pulswiederholfrequenz chaotisch variiert wird.

28. Radareinrichtung nach einem der Ansprüche 24 bis 27, **dadurch gekennzeichnet, dass** die Trägerfrequenz durch Phasenmodulation variiert wird.

29. Radareinrichtung nach einem der Ansprüche 24 bis 28, **dadurch gekennzeichnet,**
- **dass** die Trägerfrequenz durch Frequenzmodulation variiert wird,
- **dass** durch Mischen des empfangenen Signals mit der modulierten Trägerfrequenz eine virtuelle Zwischenfrequenz erzeugt wird und
- **dass** eine Auswertung des empfangenen Signals bei der virtuellen Zwischenfrequenz erfolgt.

30. Radareinrichtung nach einem der Ansprüche 24 bis 29, **dadurch gekennzeichnet, dass** die Trägerfrequenz durch Frequenzsprungverfahren variiert wird.
